(19) Europäisches Patentamt
European Patent Office
Office européen des brevets

(11) **EP 2 004 316 B1**

(12) **EUROPEAN PATENT SPECIFICATION**

(45) Date of publication and mention
of the grant of the patent:
**13.10.2010 Bulletin 2010/41**

(51) Int Cl.:
***B01F 13/00*** (2006.01)      ***B01J 19/00*** (2006.01)

(21) Application number: **07717014.0**

(22) Date of filing: **24.01.2007**

(86) International application number:
**PCT/US2007/002063**

(87) International publication number:
**WO 2007/089541 (09.08.2007 Gazette 2007/32)**

(54) **FLUIDIC DROPLET COALESCENCE**

KOALESZENZ FLUIDER TRÖPFCHEN

COALESCENCE DE GOUTTELETTES FLUIDIQUES

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **27.01.2006 US 762706 P**

(43) Date of publication of application:
**24.12.2008 Bulletin 2008/52**

(60) Divisional application:
**10175562.7**

(73) Proprietor: **The President and Fellows of Harvard
College
Cambridge, MA 02138 (US)**

(72) Inventors:
• **AHN, Keunho
San Diego, CA 92122 (US)**
• **CHONG, Henry
Cambridge, MA 02140 (US)**
• **AGRESTI, Jeremy
Cambridge, MA 02138 (US)**

• **WEITZ, David, A.
Bolton, MA 01740 (US)**
• **LINK, Darren, Roy
Guilford, CT 06437 (US)**

(74) Representative: **HOFFMANN EITLE
Patent- und Rechtsanwälte
Arabellastrasse 4
81925 München (DE)**

(56) References cited:
**WO-A-2005/021151**

• **GRASLAND-MONGRAIN, E. ET AL: "Droplet
coalescence in microfluidic devices"[Online] -
July 2003 (2003-07) XP002436104 Retrieved from
the Internet: URL:http://www.eleves.ens.fr/home/
grasland /rapports/stage4.pdf>**
• **SONG ET AL: "A Microfluidic System for
Controlling Reaction Networks in Time"
ANGEWANDTE CHEMIE, WILEY-VCH,
WEINHEIM, DE, vol. 42, no. 7, 17 February 2003
(2003-02-17), pages 768-772, XP002289726 ISSN:
1433-7851**

## Description

## FIELD OF INVENTION

The present invention generally relates to a method for the control of fluidic species and, in particular, to the coalescence of fluidic droplets.

## BACKGROUND

The manipulation of fluids to form fluid streams of desired configuration, discontinuous fluid streams, droplets, particles, dispersions, etc., for purposes of fluid delivery, product manufacture, analysis, and the like, is a relatively well-studied art. For example, highly monodisperse gas bubbles, less than 100 microns in diameter, have been produced using a technique referred to as capillary flow focusing. In this technique, gas is forced out of a capillary tube into a bath of liquid, the tube is positioned above a small orifice, and the contraction flow of the external liquid through this orifice focuses the gas into a thin jet which subsequently breaks into equal-sized bubbles via a capillary instability. In a related technique, a similar arrangement can be used to produce liquid droplets in air.

An article entitled "Generation of Steady Liquid Microthreads and Micron-Sized Monodisperse Sprays and Gas Streams," Phys. Rev. Lett., 80:2, January 12, 1998, 285-288 (Ganan-Calvo) describes formation of a microscopic liquid thread by a laminar accelerating gas stream, giving rise to a fine spray. An articled entitled "Dynamic Pattern Formation in a Vesicle-Generating Microfluidic Device," Phys. Rev. Lett., 86:18, April 30, 2001 (Thorsen, *et al.*) describes formation of a discontinuous water phase in a continuous oil phase via microfluidic cross-flow, specifically, by introducing water, at a "T" junction between two microfluidic channels, into flowing oil.

U.S. Patent No. 6,120,666, issued September 19, 2000, describes a microfabricated device having a fluid focusing chamber for spatially confining first and second sample fluid streams for analyzing microscopic particles in a fluid medium, for example in biological fluid analysis. U.S. Patent No. 6,116,516, issued September 12, 2000, describes formation of a capillary microjet, and formation of a monodisperse aerosol via disassociation of the inicrojet. U.S. Patent No. 6,187,214, issued February 13, 2001, describes atomized particles in a size range of from about 1 to about 5 microns, produced by the interaction of two immiscible fluids. U.S. Patent No. 6,248,378, issued June 19, 2001, describes production of particles for introduction into food using a microjet and a monodisperse aerosol formed when the microjet dissociates.

Microfluidic systems have been described in a variety of contexts, typically in the context of miniaturized laboratory (e.g., clinical) analysis. Other uses have been described as well. For example, International Patent Application No. PCT/USO1;17246, filed May 25, 2001, published as WO-A-0189788, entitled "Patterning of Surfaces Utilizing Microfluidic Stamps Including Three-Dimensionally Arrayed Channel Networks," by Anderson, *et al.,* published as WO 01/89788 on November 29, 2001, describes multi-level microfluidic systems that can be used to provide patterns of materials, such as biological materials and cells, on surfaces. Other publications describe microfluidic systems including valves, switches, and other components.

Document WO-A-2005/021151 discloses some of the features of claim 1, and is considered to be the closest state of the art for said claim.

While significant advances have been made in dynamics at the macro or microfluidic scale, improved techniques and the results of these techniques are needed.

## SUMMARY OF THE INVENTION

The present invention generally relates the coalescence of fluidic droplets. The subject matter of the present invention involves, in some cases, interrelated products, alternative solutions to a particular problem, and/or a plurality of different uses of one or more systems and/or articled.

The invention is defined by the method of claim 1.

Other advantages and novel features of the present invention will become apparent from the following detailed description of various non-limiting embodiments of the invention when considered in conjunction with the accompanying figures. In cases where the present specification and a document include conflicting and/or inconsistent disclosure, the present specification shall control. If two or more documents include conflicting and/or inconsistent disclosure with respect to each other, then the document having the later effective date shall control.

## BRIEF DESCRIPTION OF THE DRAWINGS

Non-limiting embodiments of the present invention will be described by way of example with reference to the accompanying figures, which are schematic and are not intended to be drawn to scale. In the figures, each identical or nearly identical component illustrated is typically represented by a single numeral. For purposes of clarity, not every component is labeled in every figure, nor is every component of each embodiment of the invention shown where illustration is not necessary to allow those of ordinary skill in the art to understand the invention. In the figures:

Fig. 1 illustrates that the velocity of a fluidic droplet within a channel may vary as a function of the size of the fluidic droplet, according to one embodiment of the invention;

Fig. 2 is a schematic diagram of one embodiment of the invention;

Figs. 3A and 3B are photomicrographs of various microfluidic devices containing fluidic droplets, according to other embodiments of the invention;

Figs. 4A and 4B illustrate certain reactions that are controlled by coalescing fluidic droplets, according to yet other embodiments of the invention; and

Figs. 5A-5C are schematic diagrams indicating certain other embodiments of the invention.

## DETAILED DESCRIPTION

The present invention generally relates to a method for the control of fluidic species and, in particular, to the coalescence of fluidic droplets. In certain instances, the systems and methods disclosed are microfluidic. In one aspect, systems and methods are related for causing two or more fluidic droplets within a channel to coalescence. The fluidic droplets may be of unequal size in certain cases. In some embodiments, a first fluidic droplet may be caused to move at a first velocity, and a second fluidic droplet may be caused to move at a second velocity different from the first velocity, for instance, substantially greater than the first velocity. The droplets may then coalesce, for example, upon application of an electric field. In the absence of an electric field, in some cases, the droplets may be unable to coalesce. In some cases, two series of fluidic droplets may coalesce, one or both series being substantially uniform. For instance, one series of droplets may have a distribution of diameters such that no more than about 5% of the droplets have a diameter greater than about 10% of the average diameter. In certain cases, one or more series of droplets may each consist essentially of a substantially uniform number of entities of a species therein (i.e., molecules, cells, particles, etc.). The fluidic droplets may be coalesced to start a reaction, and/or to stop a reaction, in some cases. For instance, a reaction may be initiated when a species in a first droplet contacts a species in a second droplet after the droplets coalesce, or a first droplet may contain an ongoing reaction and a second droplet may contain a species that inhibits the reaction. Other embodiments of the invention are directed to kits or methods for promoting the coalescence of fluidic droplets.

In one aspect, fluid channels, controls, and/or restrictions, or combinations thereof, for the purpose of forming fluidic streams (which can be droplets) within other liquids, combining fluids, combining droplets, etc., all at a variety of scales are involved. In certain embodiments, systems and methods are provided for causing two droplets to fuse or coalesce, e.g., in cases where the two droplets ordinarily are unable to fuse or coalesce, for example due to composition, surface tension, size, etc. For example, in a microfluidic system, the surface tension of the fluidic droplets, relative to their size, may prevent fusion of the fluidic droplets. The fluidic droplets may each independently contain gas or liquid.

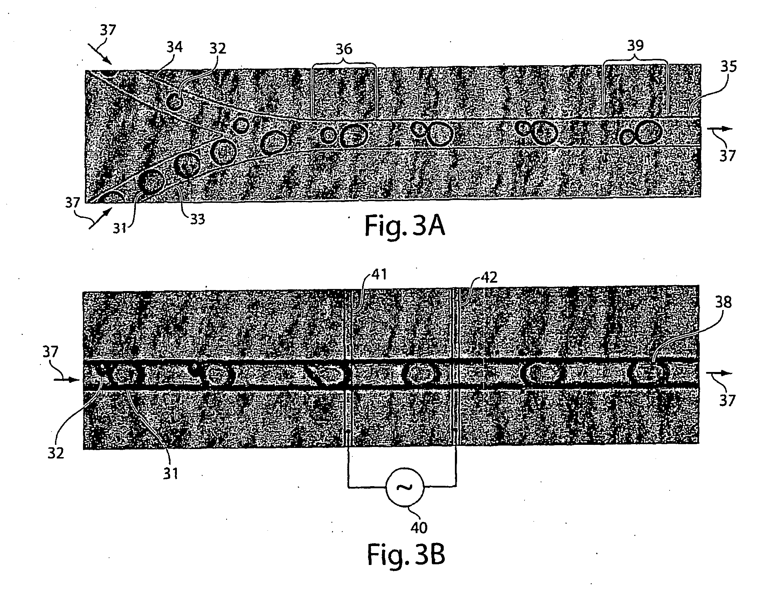

An electric field may be applied to two (or more) fluidic droplets to cause the droplets to fuse or coalesce. The electrical charge may be created using any suitable techniques known to those of ordinary skill in the art; for example, an electric field may be imposed on a channel containing the droplets, the droplets may be passed through a capacitor, a chemical reaction may occur to cause the droplets to become charged, etc. For instance, in one embodiment, an electric field may be generated proximate a portion of a channel, such as a microfluidic channel. The electric field may be generated from, for example, an electric field generator, i.e., a system able to produce an electric field, e.g., directed substantially at the channel. Techniques for producing a suitable electric field are known to those of ordinary skill in the art. For example, an electric field may be produced by applying a voltage across electrodes positioned proximate a channel, e.g., as shown in Fig. 3B. The electrodes can be fashioned from any suitable electrode material, for example, as silver, gold, copper, carbon, platinum, copper, tungsten, tin, cadmium, nickel, indium tin oxide ("ITO"), etc., as is known to those of ordinary skill in the art. The electrodes may be formed of the same material, or different materials. In some cases, transparent or substantially transparent electrodes may be used.

The electric field generator may be constructed and arranged to generate an electric field within a fluid of at least about 0.01 V/micrometer, and, in some cases, at least about 0.03 V/micrometer, at least about 0.05 V/micrometer, at least about 0.08 V/micrometer, at least about 0.1 V/micrometer, at least about 0.3 V/micrometer, at least about 0.5 V/micrometer, at least about 0.7 V/micrometer, at least about 1 V/micrometer, at least about 1.2 V/micrometer, at least about 1.4 V/micrometer, at least about 1.6 V/micrometer, or at least about 2 V/micrometer. In some embodiments, even higher electric fields may be used, for example, at least about 2 V/micrometer, at least about 3 V/micrometer, at least about 5 V/micrometer, at least about 7 V/micrometer, or at least about 10 V/micrometer or more.

The applied electric field may induce a charge, or at least a partial charge, on a fluidic droplet surrounded by a liquid. In some cases, the fluid and the liquid may be present in a channel, microfluidic channel, or other constricted space that facilitates the electric field to be placed on the field, for example, by limiting movement of the fluid within the liquid. The fluid within the fluidic droplet and the liquid may be essentially immiscible, i.e., immiscible on a time scale of interest (e.g., the time it takes a fluidic droplet to flow through a particular system or device). In some cases, the fluid may contain other entities, for example, certain molecular species (e.g., as further discussed below), cells (e.g., encapsulated by the fluid), particles, etc. In one embodiment, the fluid is present as a series of fluidic droplets within the liquid.

If the liquid contains a series of fluidic droplets within the liquid, in one set of embodiments, the series of droplets may have a substantially homogenous distribution of diameters, e.g., the droplets may have a distribution of diameters in some cases such that no more than about 10%, about 5%, about 3%, about 1%, about 0.03%, or about 0.01% of the droplets have an average diameter greater than about 10%, about 5%, about 3%, about 1%, about 0.03%, or about 0.01% of the average diameter of the droplets. If more than one series of fluidic droplets is used (e.g., arising from two different sources), each of the series may, in some cases, have a substantially homogenous distribution of diameters, although the average diameters of the fluids within each series do not necessarily have to be the same.

A charge or partial charge on one or both droplets may be induced that causes the two droplets to fuse or coalesce. Electronic charge may be placed on fluidic droplets within a liquid using any suitable technique, for example, by placing the fluid within an electric field, as previously discussed, or by causing a reaction to occur that causes the fluid to have an electric charge, for example, a chemical reaction, an ionic reaction, a photocatalyzed reaction, etc. The fluid within the fluidic droplet may be an electrical conductor. As used herein, a "conductor" is any material having a conductivity of at least about the conductivity of 18 MOhm water. The liquid surrounding the fluidic droplet may have any conductivity less than that of the fluidic droplet, i.e., the liquid may be an insulator or a "leaky insulator." In one non-limiting embodiment, the fluidic droplet may be substantially hydrophilic and the liquid surrounding the fluidic droplet may be substantially hydrophobic.

The charge placed on the fluidic droplet may be at least about $10^{-22}$ C/micrometer$^3$. In certain cases, about the charge may be at least about $10^{-21}$ C/micrometer$^3$, and in other cases, the charge may be at least about $10^{-20}$ C/micrometer$^3$, at least about $10^{-19}$ C/micrometer$^3$, at least about to$^{-18}$ C/micrometer$^3$, at least about $10^{-17}$ C/micrometer$^3$, at least about $10^{-16}$ C/micrometer$^3$, at least about $10^{-15}$ C/micrometer$^3$, at least about $10^{-14}$ C/micrometer$^3$, at least about $10^{-13}$ C/micrometer$^3$, at least about $10^{-12}$ C/micrometer$^3$, at least about $10^{-11}$ C/micrometer$^3$, at least about $10^{-10}$ C/micrometer$^3$, or at least about $10^{-9}$ C/micrometer$^3$ or more. The charge placed on the fluidic droplet may be at least about $10^{-21}$ C/micrometer$^2$ (surface area of the fluidic droplet), and in some cases, the charge may be at least about $10^{-20}$ C/micrometer$^2$, at least about $10^{-19}$ C/micrometer$^2$, at least about $10^{-18}$ C/micrometer$^2$, at least about $10^{-17}$ C/micrometer$^2$, at least about $10^{-16}$ C/micrometer$^2$, at least about $10^{-15}$ C/micrometer$^2$, at least about $10^{-14}$ C/micrometer$^2$, or at least about $10^{-13}$ C/micrometer$^2$ or more. The charge may be at least about $10^{-14}$ C/droplet, and, in some cases, at least about $10^{-13}$ C/droplet, in other cases at least about $10^{-12}$ C/droplet, in other cases at least about $10^{-11}$ C/droplet, in other cases at least about $10^{-10}$ C/droplet, or in still other cases at least about $10^{-9}$ C/droplet.

Additionally, due to the electronic nature of the electric field, very rapid coalescence and/or reaction speeds may be achieved. For example, at least about 10 droplets per second may be fused or coalesced, and in other cases, at least about 20 droplets per second, at least about 30 droplets per second, at least about 100 droplets per second, at least about 200 droplets per second, at least about 300 droplets per second, at least about 500 droplets per second, at least about 750 droplets per second, at least about 1000 droplets per second, at least about 1500 droplets per second, at least about 2000 droplets per second, at least about 3000 droplets per second, at least about 5000 droplets per second, at least about 7500 droplets per second, at least about 10,000 droplets per second, at least about 15,000 droplets per second, at least about 20,000 droplets per second, at least about 30,000 droplets per second, at least about 50,000 droplets per second, at least about 75,000 droplets per second, at least about 100,000 droplets per second, at least about 150,000 droplets per second, at least about 200,000 droplets per second, at least about 300,000 droplets per second, at least about 500,000 droplets per second, at least about 750,000 droplets per second, at least about 1,000,000 droplets per second, at least about 1,500,000 droplets per second, at least about 2,000,000 or more droplets per second, or at least about 3,000,000 or more droplets per second may be fused or coalesced. In addition, the electric field can be readily activated or deactivated, applied to a certain number or percentage of the fluidic droplets, or the like. Furthermore, the coalescence of the fluidic droplets can occur at a specific, predetermined time, and/or location within a channel. For example, a chemical reaction may occur (and/or cease to occur) once a first fluidic droplet and a second fluidic droplet coalesce or fuse.

The fluidic droplets are contained within a channel, such as a microfluidic channel. A "channel," as used herein, means a feature on or in an article (substrate) that at least partially directs the flow of a fluid. The channel can have any cross-sectional shape (circular, oval, triangular, irregular, square or rectangular, or the like) and can be covered or uncovered. In embodiments where it is completely covered, at least one portion of the channel can have a cross-section that is completely enclosed, or the entire channel may be completely enclosed along its entire length with the exception of its inlet(s) and outlet(s). A channel may also have an aspect ratio (length to average cross sectional dimension) of at least 2:1, more typically at least 3:1, 5:1, or 10:1 or more. An open channel generally will include characteristics that facilitate control over fluid transport, e.g., structural characteristics (an elongated indentation) and/or physical or chemical characteristics (hydrophobicity vs. hydrophilicity) or other characteristics that can exert a force (e.g., a containing force) on a fluid. The fluid within the channel may partially or completely fill the channel. In some cases where an open channel is used, the fluid may be held within the channel, for example, using surface tension (i.e., a concave or convex meniscus).

The channel may be of any size, for example, having a largest dimension perpendicular to fluid flow of less than about 5 mm or 2 mm, or less than about 1 mm, or less than about 500 microns, less than about 200 microns, less than about 100 microns, less than about 60 microns, less than about 50 microns, less than about 40 microns, less than about 30 microns, less than about 25 microns, less than about 10 microns, less than about 3 microns, less than about 1 micron, less than about 300 nm, less than about 100 nm, less than about 30 nm, or less than about 10 nm. In some cases the dimensions of the channel may be chosen such that fluid is able to freely flow through the article or substrate. The dimensions of the channel may also be chosen, for example, to allow a certain volumetric or linear flowrate of fluid in the channel. Of course, the number of channels and the shape of the channels can be varied by any method known to those of ordinary skill in the art. In some cases, more than one channel or capillary may be used. For example, two or more channels may be used, where they are positioned inside each other, positioned adjacent to each other, positioned to intersect with each other, etc.

The fluidic droplets to be fused or coalesced do not have the same size the same volume or diameter. For example, a first droplet (e.g., from a first series of droplets) has a volume greater a second fluidic droplet (e.g., from a second series of droplets), for instance, such that the first droplet has an average diameter that is greater than about 125% of the second droplet, and in some cases, greater than about 150%, greater than about 200%, greater than about 300%, greater than 400%, greater than 500%, etc., relative to the second droplet. A non-limiting example is shown in Fig. 3B, with smaller fluidic droplets 32 being fused with larger droplets 31.

The two (or more) fluidic droplets that are brought into contact with each other so that coalescence of the droplets can occur can be "synchronously" produced, i.e., the fluidic droplets are produced at substantially the same time. For example, two series of fluidic droplets being produced at the same frequency may be aligned such that the two series of fluidic droplets come into contact. However, in other embodiments, the fluidic droplets are "asynchronously" produced, i.e., are not produced at substantially the same time. For instance, a first series of fluidic droplets and the second series of fluidic droplets may be caused to fuse or coalesce, where the first series and the second series are not produced at substantially the same time, but are instead produced at different times, at random times, or the like. The rate at which the first series of fluidic droplets and the second series of fluidic droplets may the same, or different in some cases.

As an example, a first series of fluidic droplets and a second series of fluidic droplets may be introduced into a channel at different rates and/or times, e.g., as is illustrated in Fig. 3A with a first series of droplets 31 in channel 33 and a second series of droplets 32 in channel 34 (the direction of fluid flow within the channels is indicated by arrows 37). In Fig. 3A, the first series of droplets 31 enter channel 35 at a rate that is greater than the rate at which the second series of droplets. The fluidic droplets may then proceed at different velocities within the channel, such that they are brought into contact.

One non-limiting method of causing fluidic droplets to move at different speeds within a channel is to subject the fluidic droplets within the channel to parabolic flow, i.e., where laminar flow exists within the channel. In such a system, a smaller fluidic droplet moves more quickly than a larger fluidic droplet, as the smaller fluidic droplet experiences higher fluid average velocities pressing against it than does a larger fluidic droplet. Other non-limiting method of causing fluidic droplets to move at different speeds within a channel is to use fluidic droplets having different physical characteristics, e.g., different surface tensions, viscosities, densities, masses, or the like.

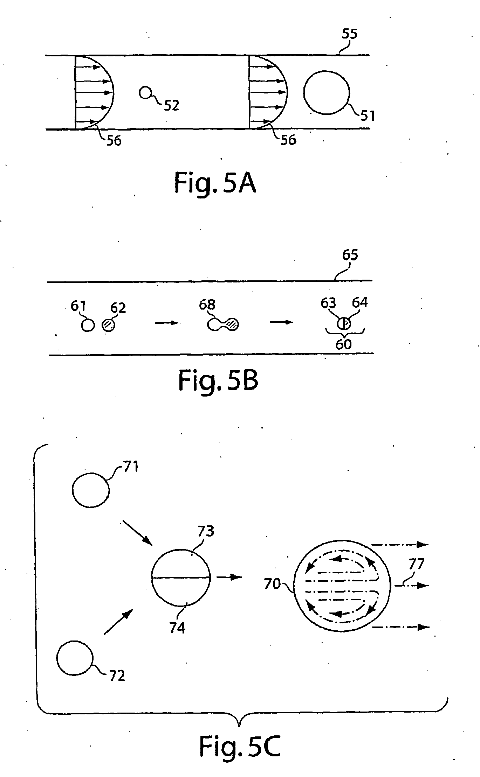

As a specific, non-limiting example, referring now to Fig. 5A, in channel 55 (which may be, e.g., circular or rectangular), a liquid within the channel may have a parabolic flow profile 56. Smaller droplet 52 in channel 55 is subject to a higher fluid average velocities pressing against it (e.g., as it experiences only the "apex" of parabolic flow profile 56), while larger droplet 51 in channel 55 is subject to a lower fluid average velocity. Thus, by selecting the size of the fluidic droplets that are produced (e.g., such that the fluidic droplets within the channel would move at different average flowrates) smaller fluidic droplets can then move at greater velocities than larger fluidic droplets. Accordingly, in a channel, a smaller fluidic droplet may "catch up" with a larger fluidic droplet, for instance, such that the two fluidic droplets come into physical contact, e.g., prior to causing their fusion or coalescence to occur. For instance, the smaller fluidic droplet may move at a velocity that is at least about 125%, at least about 150%, at least about 200%, at least about 300%, at least about 400%, or at least about 500% that of the velocity of the larger fluidic droplet.

In Fig. 3A it is illustrated that fluidic droplet 31 from channel 34 enters channel 35 ahead of fluidic droplet 32 from channel 31. The fluidic droplets are separated and not in contact, as indicated by group 36. However, as fluidic droplet 32 moves at a velocity greater than that of fluidic droplet 31, fluidic droplet 31 "catches up" to fluidic droplet 32, as indicated by group 39. However, the droplets, even when in physical contact as indicated by group 39, may not necessarily coalesce, e.g., in the absence of an electric field.

As mentioned, one method of causing two or more droplets to fuse or coalesce is to impart a charge or a partial charge on one or more of the droplets, e.g., through action of an applied electric field. Thus, referring now to Fig. 3B, droplets 31 and 32 are in physical contact, but do not coalesce or fuse due to their size and/or surface tension, etc. The droplets may not be able to fuse even if a surfactant is applied to lower the surface tension of the droplets. However, upon the application of an electric field, produced by creating a voltage across electrodes 41 and 42 using voltage source 40, inducing the droplets to assume opposite charges or electric dipoles on the surfaces closest to each other, droplets 31 and 32 fuse to form a combined droplet 38. The droplets may fuse through the creation of a "bridge" of fluid between the two droplets, which may occur due to the charge-charge interactions between the two fluids. The creation of the "bridge" of fluid between the two droplets thus allows the two droplets to exchange material and/or coalesce into one droplet. An example of a "bridge" is shown in Fig. 5B, where droplets fluidic 51 and 52 fuse via the formation of a "bridge" 68. Thus, in some embodiments, the invention provides for the coalescence of two separate droplets into one coalesced droplet in systems where such coalescence ordinarily is unable to occur, e.g., due to size and/or surface tension; etc.

It should be noted, however, that when two droplets "coalesce," perfect mixing of the two droplets does not instantaneously occur. Instead, as is shown in Fig. 5B, a combined droplet 60 in channel 65 may initially be formed of a first region 63 (from first droplet 61) and a second region 64 (from second droplet 62). In some cases, the two regions may remain as separate regions, thus resulting in a non-uniform fluid droplet, e.g., if the first fluidic droplet and the second fluidic droplet each have a different composition. In some cases, the two regions within the droplet may remain separate (without additional mixing factors) due to the flow of fluid within the droplet. The droplet may also exhibit internal "counter-revolutionary" flow, which may prevent the two fluids from substantially mixing in some cases. For example, in Fig. 5C, first droplet 71 and second droplet 72 coalesce to form combined droplet 70 having a first region 73 and a second region 74, which do not mix as combined droplet 70 moves in direction 77.

However, in other cases, the two regions within the combined droplet may be allowed to mix, react, or otherwise interact with each other, resulting in a homogeneously (i.e., completely) mixed, or at least partially mixed, fluid droplet. The mixing may occur through natural processes, for example, through diffusion (e.g., through the interface between the two regions), through reaction of the two fluids with each other, or through fluid flow within the droplet (i.e., convection). However, in some cases, mixing within the fluidic droplet may be enhanced in some fashion. For example, the droplet may be passed through one or more regions which cause the droplet to change direction in some fashion. The change of direction may alter convection patterns within the droplet, allowing the two fluids to be mixed, resulting in an at least partially mixed droplet.

Coalescence of two (or more) fluidic droplets may be used to control a reaction involving one or more reactants contained within one or more of the fluidic droplets. As one example, a first fluidic droplet may contain a first reactant and a second fluidic droplet may contain a second reactant, where a reaction occurs when the first reactant and the second reactant come into contact.

Thus, prior to coalescence of the first and second fluidic droplets, the first and second reactants are not in direct contact and are thus unable to react. After coalesce, e.g., by application of an electric field, the first and second reactants come into contact and the reaction may proceed. Thus, the reaction may be controlled, for example, such that the reaction occurs at a certain time and/or at a certain point within a channel, e.g., as determined by an applied electric field. If the reaction is determinable in some fashion (e.g., using a color change), the reaction may be determined as a function of time, or distance traveled in the channel. The reaction, in one embodiment, may be a precipitation reaction (e.g., the two or more reactants may react to produce a particle, for example, a quantum dot). The two reactants may also be, for example, two reactive chemicals, two proteins, an enzyme and a substrate, two nucleic acids, a protein and a nucleic acid, an acid and a base, an antibody and an antigen, a ligand and a receptor, a chemical and a catalyst, etc.

As another example, one or both droplets may be a cell. For example, if both droplets are (or contain) cells, the two cells may be fused together, for example, to create a hybridoma. In another example, one droplet may be a cell and the other droplet may contain an agent to be delivered to the cell, for example, a nucleic acid (e.g., DNA, for example, for gene therapy), a protein, a hormone, a virus, a vitamin, an antioxidant, etc. As yet another example, one of the two droplets to be fused or coalesced may contain an ongoing chemical reaction (e.g., of an enzyme and a substrate), while the other droplet contains an inhibitor to the chemical reaction, which may partially or totally inhibit the reaction, for example, due to competitive or noncompetitive inhibition (i.e., the second reactant reacts with the first reactant, inhibiting the first reactant from participating in other reactions). Thus, coalescence of the droplets may inhibit the ongoing chemical reaction, e.g., partially or totally. In some embodiments, additional reactions and/or other steps may be performed on the coalesced droplet, before or after mixing of the two original droplets.

The reaction may be very tightly controlled in some cases. For instance, the fluidic droplets may consist essentially of a substantially uniform number of entities of a species therein (i.e., molecules, cells, particles, etc.). For example, 90%, 93%, 95% 97%, 98%, or 99%, or more of the droplets may each contain the same number of entities of a particular species. For instance, a substantial number of the droplets so produced may each contain 1 entity, 2 entities, 3 entities, 4 entities, 5 entities, 7 entities, 10 entities, 15 entities, 20 entities, 25 entities, 30 entities, 40 entities, 50 entities, 60 entities, 70 entities, 80 entities, 90 entities, 100 entities, etc., where the entities are molecules or macromolecules, cells, particles, etc. In some cases, the droplets may contain a range of entities, for example, less than 20 entities, less than 15 entities, less than 10 entities, less than 7 entities, less than 5 entities, or less than 3 entities. Thus, by controlling the number or amount of reactants within each fluidic droplet, a high degree of control over the reaction may be achieved.

The coalesced fluidic droplet may be hardened into a solid. As used herein, the "hardening" of a fluidic stream refers to a process by which at least a portion of the fluidic stream is converted into a solid or at least a semisolid state (e.g., a gel, a viscoelastic solid, etc.). Such hardening may occur after fusion or coalescence of the droplets has occurred.

A variety of materials and methods can be used to form components of the system, according to one set of embodiments of the present invention. In some cases various materials selected lend themselves to various methods. For example, components of the invention can be formed from solid materials, in which the channels can be formed via micromachining, film deposition processes such as spin coating and chemical vapor deposition, laser fabrication, photolithographic techniques, etching methods including wet chemical or plasma processes, and the like. See, for example, Angell, et al., Scientific American 248:44-55 (1983). In one embodiment, at least a portion of the system is formed of silicon by etching features in a silicon chip. Technology for precise and efficient fabrication of devices of the invention from silicon is known. In another embodiment that section (or other sections) can be formed of a polymer, and can be an elastomeric polymer, or polytetrafluoroethylene (PTFE; Teflon®), or the like.

Different components can be fabricated of different materials. For example, a base portion including a bottom wall and side walls can be fabricated from an opaque material such as silicon or PDMS, and a top portion can be fabricated from a transparent material such as glass or a transparent polymer, for observation and control of the fluidic process. Components can be coated so as to expose a desired chemical functionality to fluids that contact interior channel walls, where base supporting material does not have the precise, desired functionality. For example, components can be fabricated as illustrated, with interior channel walls coated with another material.

Material used to fabricate devices of the invention, or material used to coat interior walls of fluid channels, may desirably be selected from among those materials that will not adversely affect or be affected by fluid flowing through the device, e.g., material(s) that is chemically inert in the presence of fluids to be used within the device.

Components of the invention can be fabricated from polymeric and/or flexible and/or elastomeric materials, and can be conveniently formed of a hardenable fluid, facilitating fabrication via molding (e.g. replica molding, injection molding, cast molding, etc.). The hardenable fluid can be essentially any fluid art that can be induced to solidify, or that spontaneously solidifies, into a solid capable of containing and transporting fluids contemplated for use in and with the network structure. In one embodiment, the hardenable fluid comprises a polymeric liquid or a liquid polymeric precursor (i.e. a "prepolymer"). Suitable polymeric liquids can include, for example, thermoplastic polymers, thermoset polymers, or mixture of such polymers heated above their melting point; or a solution of one or more polymers in a suitable solvent, which solution forms a solid polymeric material upon removal of the solvent, for example, by evaporation. Such polymeric materials, which can be solidified from, for example, a melt state or by solvent evaporation, are well known to those of ordinary skill in the art. A variety polymeric materials, many of which are elastomeric, are suitable, and are also suitable for forming molds or mold masters, for embodiments where one or both of the mold masters is composed of an elastomeric material. A non-limiting list of examples of such polymers includes polymers of the general classes of silicone polymers, epoxy polymers, and acrylate polymers. Epoxy polymers are characterized by the presence of a three-membered cyclic ether group commonly referred to as an epoxy group, 1,2-epoxide, or oxirane. For example, diglycidyl ethers of bisphenol A can be used, in addition to compounds based on aromatic amine, triazine, and cycloaliphatic backbones. Another example includes the well-known Novolac polymer. Examples of silicone elastomers suitable for use according to the invention include those formed from precursors including the chlorosilanes such as methylchlorosilanes, ethylchlorosilanes, and phenylchlorosilanes, and the like.

Silicone polymers are preferred in one set of embodiments, for example, the silicone elastomer polydimethylsiloxane (PDMS). Exemplary polydimethylsiloxane polymers include those sold under the trademark Sylgard by Dow Chemical Co., Midland, MI, and particularly Sylgard 182, Sylgard 184, and Sylgard 186. Silicone polymers including PDMS have several beneficial properties simplifying fabrication of the microfluidic structures of the invention. For instance, such materials are inexpensive, readily available, and can be solidified from a prepolymeric liquid via curing with heat. For example, PDMSs are typically curable by exposure of the prepolymeric liquid to temperatures of about, for example, 65 °C to about 75 °C for exposure times of about, for example, 1 hour. Also, silicone polymers, such as PDMS, can be elastomeric and thus may be useful for forming very small features with relatively high aspect ratios, necessary in certain embodiments of the invention. Flexible (e.g. elastomeric) molds or masters can be advantageous in this regard.

One advantage of forming structures such as microfluidic structures of the invention from silicone polymers, such as PDMS, is the ability of such polymers to be oxidized, for example by exposure to an oxygen-containing plasma such as an air plasma, so that the oxidized structures contain at their surface chemical groups capable of cross-linking to other oxidized silicone polymer surfaces or to the oxidized surfaces of a variety of other polymeric and non-polymeric materials. Thus, components can be fabricated and then oxidized and essentially irreversibly sealed to other silicone polymer surfaces, or to the surfaces of other substrates reactive with the oxidized silicone polymer surfaces, without the need for separate adhesives or other sealing means. In most cases, sealing can be completed simply by contacting an oxidized silicone surface to another surface without the need to apply auxiliary pressure to form the seal. That is, the pre-oxidized silicone surface acts as a contact adhesive against suitable mating surfaces. Specifically, in addition to being irreversibly sealable to itself, oxidized silicone such as oxidized PDMS can also be sealed irreversibly to a range of oxidized materials other than itself including, for example, glass, silicon, silicon oxide, quartz, silicon nitride, polyethylene, polystyrene, glassy carbon, and epoxy polymers, which have been oxidized in a similar fashion to the PDMS surface (for example, via exposure to an oxygen-containing plasma). Oxidation and sealing methods useful in the context of the present invention, as well as overall molding techniques, are described in Duffy et al., Rapid Prototyping of Microfluidic Systems and Polydimethylsiloxane, Analytical Chemistry, Vol. 70, pages 474-480, 1998.

Another advantage to forming microfluidic structures of the invention (or interior, fluid-contacting surfaces) from oxidized silicone polymers is that these surfaces can be much more hydrophilic than the surfaces of typical elastomeric polymers (where a hydrophilic interior surface is desired). Such hydrophilic channel surfaces can thus be more easily filled and wetted with aqueous solutions than can structures comprised of typical, unoxidized elastomeric polymers or other hydrophobic materials.

A bottom wall can be formed of a material different from one or more side walls or a top wall, or other components. For example, the interior surface of a bottom wall can comprise the surface of a silicon wafer or microchip, or other substrate. Other components can, as described above, be sealed to such alternative substrates. Where it is desired to seal a component comprising a silicone polymer (e.g. PDMS) to a substrate (bottom wall) of different material, it is preferred that the substrate be selected from the group of materials to which oxidized silicone polymer is able to irreversibly seal (e.g., glass, silicon, silicon oxide, quartz, silicon nitride, polyethylene, polystyrene, epoxy polymers, and glassy carbon surfaces which have been oxidized). Alternatively, other sealing techniques can be used, as would be apparent to those of ordinary skill in the art, including, but not limited to, the use of separate adhesives, thermal bonding, solvent bonding, ultrasonic welding, etc.

The following definitions will aid in the understanding of the invention. As used herein, a "cell" is given its ordinary meaning as used in biology. The cell may be any cell or cell type. For example, the cell may be a bacterium or other single-cell organism, a plant cell, or an animal cell. If the cell is a single-cell organism, then the cell may be, for example, a protozoan, a trypanosome, an amoeba, a yeast cell, algae, etc. If the cell is an animal cell, the cell may be, for example, an invertebrate cell (e.g., a cell from a fruit fly), a fish cell (e.g., a zebrafish cell), an amphibian cell (e.g., a frog cell), a reptile cell, a bird cell, or a mammalian cell such as a primate cell, a bovine cell, a horse cell, a porcine cell, a goat cell, a dog cell, a cat cell, or a cell from a rodent such as a rat or a mouse. If the cell is from a multicellular organism, the cell may be from any part of the organism. For instance, if the cell is from an animal, the cell may be a cardiac cell, a fibroblast, a keratinocyte, a heptaocyte, a chondracyte, a neural cell, a osteocyte, a muscle cell, a blood cell, an endothelial cell, an immune cell (e.g., a T-cell, a B-cell, a macrophage, a neutrophil, a basophil, a mast cell, an eosinophil), a stem cell, etc. In some cases, the cell may be a genetically engineered cell. In certain embodiments, the cell may be a Chines hamster ovarian ("CHO") cell or a 3T3 cell.

In some, but not all embodiments, all components of the systems and methods described herein are microfluidic. "Microfluidic," as used herein, refers to a device, apparatus or system including at least one fluid channel having a cross-sectional dimension of less than 1 mm, and a ratio of length to largest cross-sectional dimension of at least 3:1. A "microfluidic channel," as used herein, is a channel meeting these criteria.

The "cross-sectional dimension" of the channel is measured perpendicular to the direction of fluid flow. Most fluid channels in components of the invention have maximum cross-sectional dimensions less than 2 mm, and in some cases, less than 1 mm. In one set of embodiments, all fluid channels containing embodiments of the invention are microfluidic or have a largest cross sectional dimension of no more than 2 mm or 1 mm. In another embodiment, the fluid channels may be formed in part by a single component (e.g. an etched substrate or molded unit). Of course, larger channels, tubes, chambers, reservoirs, etc. can be used to store fluids in bulk and to deliver fluids to components of the invention. In one set of embodiments, the maximum cross-sectional dimension of the channel(s) containing embodiments of the invention are less than 500 microns, less than 200 microns, less than 100 microns, less than 50 microns, or less than 25 microns.

The fluidic droplets within the channels may have a cross-sectional dimension smaller than about 90% of an average cross-sectional dimension of the channel, and in certain embodiments, smaller than about 80%, about 70%, about 60%, about 50%, about 40%, about 30%, about 20%, about 10%, about 5%, about 3%, about 1%, about 0.5%, about 0.3%, about 0.1%, about 0.05%, about 0.03%, or about 0.01% of the average cross-sectional dimension of the channel.

As used herein, "integral" means that portions of components are joined in such a way that they cannot be separated from each other without cutting or breaking the components from each other.

A "droplet," as used herein is an isolated portion of a first fluid that is completely surrounded by a second fluid. It is to be noted that a droplet is not necessarily spherical, but may assume other shapes as well, for example, depending on the external environment. In one embodiment, the droplet has a minimum cross-sectional dimension that is substantially equal to the largest dimension of the channel perpendicular to fluid flow in which the droplet is located.

The "average diameter" of a population of droplets is the arithmetic average of the diameters of the droplets. Those of ordinary skill in the art will be able to determine the average diameter of a population of droplets, for example, using laser light scattering or other known techniques. The diameter of a droplet, in a non-spherical droplet, is the mathematically-defined average diameter of the droplet, integrated across the entire surface. As non-limiting examples, the average diameter of a droplet may be less than about 1 mm, less than about 500 micrometers, less than about 200 micrometers, less than about 100 micrometers, less than about 75 micrometers, less than about 50 micrometers, less than about 25 micrometers, less than about 10 micrometers, or less than about 5 micrometers. The average diameter of the droplet may also be at least about 1 micrometer, at least about 2 micrometers, at least about 3 micrometers, at least about 5 micrometers, at least about 10 micrometers, at least about 15 micrometers, or at least about 20 micrometers in certain cases.

As used herein, a "fluid" is given its ordinary meaning, i.e., a liquid or a gas. The fluid may have any suitable viscosity that permits flow. If two or more fluids are present, each fluid may be independently selected among essentially any fluids (liquids, gases, and the like) by those of ordinary skill in the art, by considering the relationship between the fluids. The fluids may each be miscible or immiscible. For example, two fluids can be selected to be immiscible within the time frame of formation of a stream of fluids, or within the time frame of reaction or interaction. Where the portions remain liquid for a significant period of time then the fluids should be significantly immiscible. Where, after contact and/or formation, the dispersed portions are quickly hardened by polymerization or the like, the fluids need not be as immiscible. Those of ordinary skill in the art can select suitable miscible or immiscible fluids, using contact angle measurements or the like, to carry out the techniques of the invention.

As used herein, a first entity is "surrounded" by a second entity if a closed loop can be drawn around the first entity through only the second entity. A first entity is "completely surrounded" if closed loops going through only the second entity can be drawn around the first entity regardless of direction. In one aspect, the first entity may be a cell, for example, a cell suspended in media is surrounded by the media. In another aspect, the first entity is a particle. In yet another aspect of the invention, the entities can both be fluids. For example, a hydrophilic liquid may be suspended in a hydrophobic liquid, a hydrophobic liquid may be suspended in a hydrophilic liquid, a gas bubble may be suspended in a liquid, etc. Typically, a hydrophobic liquid and a hydrophilic liquid are substantially immiscible with respect to each other, where the hydrophilic liquid has a greater affinity to water than does the hydrophobic liquid. Examples of hydrophilic liquids include, but are not limited to, water and other aqueous solutions comprising water; such as cell or biological media, ethanol, salt solutions, etc. Examples of hydrophobic liquids include, but are not limited to, oils such as hydrocarbons, silicon oils, fluorocarbon oils, organic solvents etc.

The term "determining," as used herein, generally refers to the analysis or measurement of a species, for example, quantitatively or qualitatively, or the detection of the presence or absence of the species. "Determining" may also refer to the analysis or measurement of an interaction between two or more species, for example, quantitatively or qualitatively, or by detecting the presence or absence of the interaction. Example techniques include, but are not limited to, spectroscopy such as infrared, absorption, fluorescence, UV/visible, FTIR ("Fourier Transform Infrared Spectroscopy"), or Raman; gravimetric techniques; ellipsometry; piezoelectric measurements; immunoassays; electrochemical measurements; optical measurements such as optical density measurements; circular dichroism; light scattering measurements such as quasielectric light scattering; polarimetry; refractometry; or turbidity measurements.

The following examples are intended to illustrate certain embodiments of the present invention, but do not exemplify the full scope of the invention.

## EXAMPLE 1

This example demonstrates controlled, high speed coalescence of droplets within a microfluidic device. In low Reynolds number flows, such as in microfluidic devices, smaller droplets may flow at higher velocities than larger droplets due to the parabolic flow velocity distribution in channels. The method described in this example uses this property to provide synchronization of asynchronous droplets, thus allowing precise control of the time and location of the coalescence.

Two streams of different-sized fluidic droplets were made independently with different time scales, sizes, and compositions, and were merged in a single microfluidic channel where the small droplets are able to "catch up" to and come in contact with larger droplets. In the presence of surfactants, and in the absence of external forces, the droplets touch without coalescing. However, when a pair of droplets in contact with each other passes through a confined electric field, the stabilizing property of the surfactant is overcome, and the droplets may coalesce. As a demonstration, in this example, the reaction kinetics from a precise time point after adding a droplet containing a substrate to a second droplet containing an enzyme were measured.

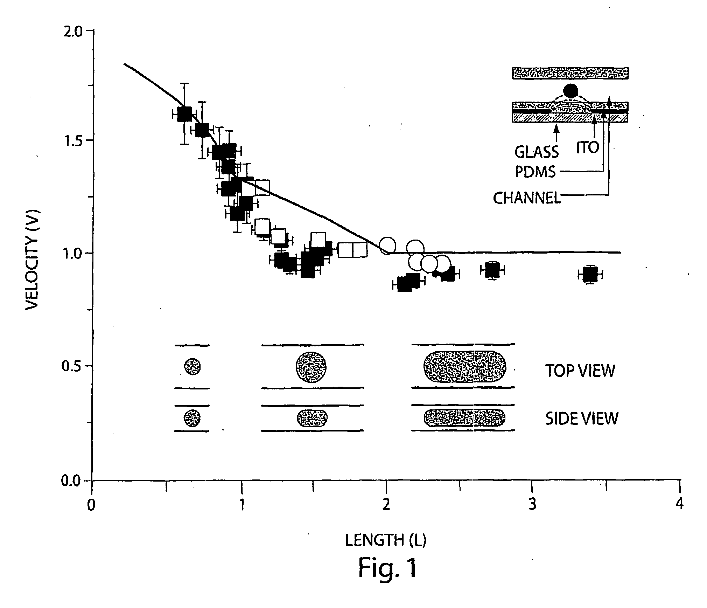

The microfluidic device used in this example was fabricated using standard soft lithography methods. Briefly, a two-channel pattern of 25 micrometer-thick and 50 micrometer-wide negative photoresist was produced by UV photolithography on a silicon wafer (see Fig. 3A). A mixture of PDMS elastomer and crosslinker with a weight ratio of 5:1 was molded onto the channels and was peeled off after being partially cured. Another mixture with a weight.ratio of 20:1 was spincast at 3000 rpm to a 30 micrometer film on a glass substrate, on which has been patterned indium tin oxide (ITO) electrodes, and also partially cured. The PDMS mold was bonded to the PDMS-coated ITO-glass substrate and fully cured to enhance bonding between the two layers. A schematic cross section of the sorting region of the fabricated microfluidic device is shown in Fig. 1.

In this example, a device was prepared to produce water droplets in hexadecane (viscosity, $\eta_{oil}$ (eta) = 3.4 x $10^{-3}$ Pa s; density 0.773 g/ml). 5 wt% surfactant (SPAN80) was added to prevent coalescence. The size of the water droplets was controlled by adjusting flow rates of oil and water using syringe pumps (Harvard Apparatus). Water droplets produced with radii from 13 to 50 micrometers using water flow rates from 5 to 80 microliters/hr and oil flow rates from 100 to 200 microliters/hr. Droplet movement was recorded by a high-speed camera at a frame rate of 10 kHz to measure relation between droplet size and velocity.

Due to surface tension, the water droplets in this example had a generally spherical shape with diameters smaller than the channel height of 25 micrometers. As the diameters of the droplets were increased beyond 25 micrometers, the fluidic droplets touched top and bottom surfaces of the rectangular channel, and their shape was constricted by the channel shape as "pancakes," and above 50 micrometers, the droplets touched four surfaces of the rectangular channel and become "plugs" (lower inserts in Fig,1).

Droplet flow in rectangular channels appeared to be similar to cylindrical tubes, where droplets have only spherical and plug-like shapes because of axial symmetry and their velocity generally decreases proportional to the square of their size following the parabolic flow pattern in the cylindrical tubes. As a first approximation, and without wishing to be bound by any theory; this size-dependent droplet velocity dispersion can be understood by considering liquid flux passing through a certain cross-sectional area of droplets since the droplets were pushed by continuous phase liquid behind them. Thus, the droplet velocity could be approximated as the average velocity of parabolic velocity profile across the droplet cross section. With a velocity profile of $u_z(r) = A(d^2 - r^2)$, in the absence of the droplets, the droplet velocity was calculated to be U(R) =

$$\int_0^R u(x, y)\, 2\pi r\, dr/\pi r^2 = A(d^2 - R^2/2),$$ where d

is the radius of the channel and A is a constant related to pressure gradient and viscosity. This result appeared to be a good approximation for the parabolic dependence of the droplet velocity on the droplet size. Thus, for example, smaller droplets of continuous phase particle size will have maximum velocity and larger droplets with the same diameter as the channel would flow with the average velocity of the Poiseuille flow, which is half of the maximum.

The same analogy may be used for droplet flow in rectangular channels. From a Poiseuille profile, $u_z(x, y)$, in rectangular channels in the absence of droplets, the velocity of a droplet located in the center of the channel is given as a function of droplet length, 1, by

$$U(l) = \int_{A(l)} u_z(x, y)\, dx\, dy/A(l),$$ where A(1) is cross- section area of droplet.

This result does not have an analytical form, but a numerical calculation is plotted as a solid line in Fig 1. Comparing with experimental results for droplet velocities (V) as a function of length (I), this approximation appears to explain the size dependence of droplet velocity in the rectangular channels. However, the above approximation does not consider change of droplet shape by shear force and velocity profile due to presence of droplets.

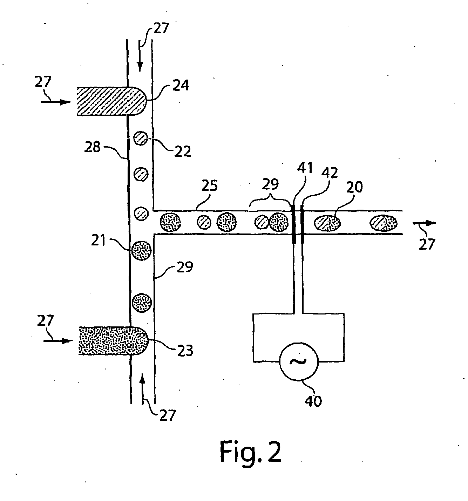

This size-dependent droplet velocity dispersion was used as a passive way of synchronization of two different size droplets. Once they were synchronized, they could be easily coalesced. This was shown in a microfluidic device for combining droplets, as illustrated in Fig. 2, with the direction of fluid flow indicated by arrows 27. Two streams of droplets 21 (in channel 28) and 22 (in channel 29), independently formed at T-junctions 23, 24, respectively, merged into a single channel 25. The mixed droplets were synchronized as one stream of two droplets flowing in contact due to the size-dependent droplet velocity dispersion, i.e., the smaller droplets 22 move more rapidly than the larger droplets 21 in channel 25, such that the smaller droplets "catch up" with the larger droplets until the droplets come into contact, shown by group 29. The droplets in contact did not coalesce, and were stabilized by surfactant added in the oil.

Droplets with two different diameters, about 50 and 25 micrometers, were produced and merged into a single channel in this example. The droplet formation rate was fixed to be about 100 per second by adjusting flow rates of water and oil infused into each of the T-junctions (e.g., 100 microliter/hr, 10 microliter/hr, 1 microliter/hr, etc.). The smaller droplet of 25 micrometer diameter "catches up" the 50 micrometer droplet while flowing downstream in channel 25 within about 1 mm, although the actual distance before "catching up" depended on initial spacing between droplets and their velocity difference (Fig. 3A). In this example, this took less than 100 ms.

Afterwards, by applying an electric field using electrodes, produced by creating a voltage across electrodes 41 and 42 using voltage source 40, the two droplets were coalesced into one combined droplet 20. The electrodes were in parallel and were located about 1 cm from the intersection of channels 28 and 29, and were perpendicular to the flow direction to generate electric field parallel to the flow direction. The droplets then coalesced while passing by the electrode region (Fig. 3B). At least 100 V (AC) was required ensure coalescence of all the droplets passing, in this example.

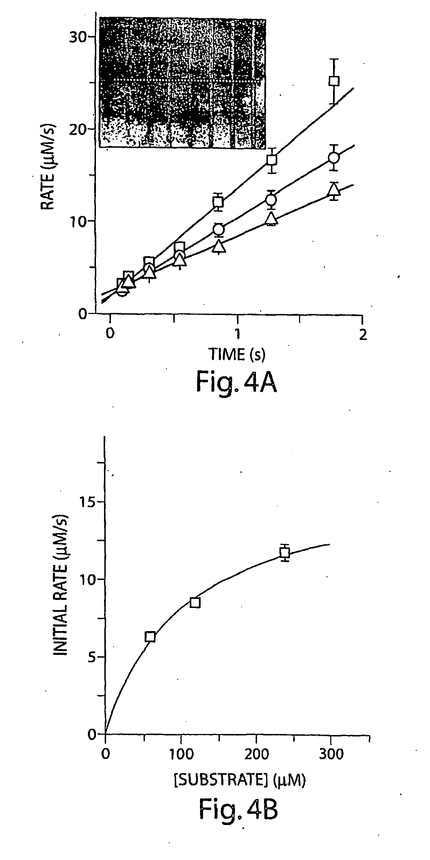

To use this device in a bioassay, in this example, an enzyme kinetic reaction between an enzyme, beta-galactosidase, and a substrate, FDG (fluorescein di-b-D-galactopyranoside), was measured. At one T-junction, a series fluidic droplets containing a beta-galactosidase solution with picomolar concentrations were produced. At the other T-junction, a series of fluidic droplets containing a FDG solution were produced. Three different substrates concentrations of FDG (240, 120, and 60 micromolar), and a control fluorescein solution of 50 M were used to calibrate the amount of product turnover by the enzyme, i.e., the enzymatic reaction rate. From fluorescence imaging (the insert illustrates an example of a fluorescence image), the reaction rates of beta-galactosidase for the three different substrate concentrations were determined, as shown in Fig. 4A. Comparing this data with Michaelis-Menten equation, as shown in Fig. 4B, $k_{cat}$ and $K_m$ could be determined.

While several embodiments of the present invention have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present invention. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used. Those skilled in the art will recognize, or be able to ascertain using no more than routine experimentation, many equivalents to the specific embodiments of the invention described herein. It is, therefore, to be understood that the foregoing embodiments are presented by way of example only and that, within the scope of the appended claims and equivalents thereto, the invention may be practiced otherwise than as specifically described and claimed.

All definitions, as defined and used herein, should be understood to control over dictionary definitions, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "molding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

**Claims**

1. A method, comprising:

   providing a microfluidic system comprising a channel (35);
   providing a first fluidic stream of droplets (31) within said channel (35), wherein the droplets (31) within the first fluidic stream are larger droplets (31) having an average diameter of less than about 100 microns and a distribution of diameters such that no more than about 5% of the droplets (31) have a diameter greater than about 10% of the average diameter;
   providing a second fluidic stream of droplets (32), wherein the droplets (32) within the second fluidic stream are smaller droplets (32) having an average diameter of less than about 100 microns and a distribution of diameters such that no more than about 5% of the droplets (32) have a diameter greater than about 10% of the average diameter, and wherein the droplets (31) within the first fluidic stream have an average diameter of greater than about 125% of the average diameter of the droplets (32) within the second fluidic stream; and
   causing the larger droplets (31) of the first fluidic stream to move at a first velocity within the channel (35) and the smaller droplets (32) of the second fluidic stream to move at a second velocity substantially greater than the first velocity within the channel (35);
   causing at least one droplet (31) of the first fluidic stream to contact at least one droplet (32) of the second fluidic stream such that the droplets in contact do not coalesce; and
   applying an electric field to the at least one droplet (31) of the first fluidic stream of droplets (31) and the at least one droplet (32) of the second fluidic stream of droplets (32) in contact, such that the droplets coalesce into one combined droplet (38).

2. The method of claim 1, wherein the volume of the first fluidic droplet (31) is greater than the volume of the second fluidic droplet (32), the act of applying an electric field optionally comprises applying the electric field to a channel (35) containing the first fluidic stream of droplets (31) and the second fluidic stream of droplets (32) and/or the channel (35) has an average cross-sectional dimension of less than about 5 mm.

3. The method of claim 1, wherein the first fluidic droplet (31) has a cross-sectional dimension of less than about 100, 30, 10 or 3 microns.

4. The method of claim 1, further comprising allowing fluid within the first fluidic droplet (31) and fluid within the second fluidic droplet (32) to mix within the combined droplet (38).

5. The method of claim 1, wherein the first fluidic droplet (31) and the second fluidic droplet (32) each have a different composition and wherein at least one of the first fluidic droplet (31) and the second fluidic droplet (32) optionally comprises an enzyme or one of the first fluidic droplet (31) and the second fluidic droplet (32) optionally comprises two agents interacting in a chemical reaction; and the other fluidic droplet comprises an inhibitor to the chemical reaction.

6. The method of claim 1, wherein the first fluidic droplet (31) and/or the second fluidic droplet (32) is liquid.

7. The method of claim 1, further comprising hardening at least a portion of the combined droplet (38).

8. The method of claim 1, wherein the second velocity is at least about 150%, 200%, 300% or 500% of the first velocity.

**Patentansprüche**

1. Verfahren, umfassend:

   das Bereitstellen eines mikrofluiden Systems, umfassend einen Kanal (35);
   das Bereitstellen eines ersten fluiden Stroms von Tröpfchen (31) innerhalb des Kanals (35), wobei die Tröpfchen (31) innerhalb des ersten fluiden Stroms grössere Tröpfchen (31) sind, mit einem Durchschnittsdurchmesser von weniger als ca. 100 μm und einer Verteilung des Durchmessers, so dass nicht mehr als ca. 5 % der Tröpfchen (31) einen grösseren Durchmesser als ca. 10 % des Durchschnittsdurchmessers haben;

das Bereitstellen eines zweiten fluiden Stroms von Tröpfchen (32), wobei die Tröpfchen (32) innerhalb des zweiten fluiden Stroms kleinere Tröpfchen (32) sind mit einem Durchschnittsdurchmesser von weniger als ca. 100 μm und einer Verteilung des Durchmessers, so dass nicht mehr als ca. 5 % der Tröpfchen (32) einen grösseren Durchmesser als ca. 10 % des Durchschnittsdurchmessers haben, und wobei die Tröpfchen (31) innerhalb des ersten fluiden Stroms einen grösseren Durchschnittsdurchmesser als ca. 125 % des Durchschnittsdurchmessers der Tröpfchen (32) innerhalb des zweiten fluiden Stroms haben; und

das Bewirken, dass sich die grösseren Tröpfchen (31) des ersten fluiden Stroms mit einer ersten Geschwindigkeit innerhalb des Kanals (35) bewegen und dass sich die kleineren Tröpfchen (32) des zweiten fluiden Stroms mit einer zweiten Geschwindigkeit bewegen, die wesentlich grösser ist als die erste Geschwindigkeit innerhalb des Kanals (35);

das Bewirken, dass mindestens ein Tröpfchen (31) des ersten fluiden Stroms mit mindestens einem Tröpfchen (32) des zweiten fluiden Stroms in Berührung kommt, so dass die sich berührenden Tröpfchen nicht koaleszieren; und das Anlegen eines elektrischen Feldes an das mindestens eine Tröpfchen (31) des ersten fluiden Stroms von Tröpfchen (31) und das mindestens eine Tröpfchen (32) des zweiten fluiden Stroms von Tröpfchen (32), die sich berühren, so dass die Tröpfchen zu einem vereinten Tröpfchen (38) koaleszieren.

2. Verfahren gemäss Anspruch 1, wobei das Volumen des ersten fluiden Tröpfchens (31) grösser ist als das Volumen des zweiten fluiden Tröpfchens (32), der Vorgang des Anlegens eines elektrischen Feldes wahlweise das Anlegen eines elektrischen Feldes an den Kanal (35) umfasst, der den ersten fluiden Strom der Tröpfchen (31) und den zweiten fluiden Strom der Tröpfchen (32) enthält, und/oder der Kanal (35) einen Durchschnittsdurchmesser von weniger als ca. 5 mm hat.

3. Verfahren gemäss Anspruch 1, wobei das erste fluide Tröpfchen (31) einen Durchmesser von weniger als ca. 100, 30, 10 oder 3 μm hat.

4. Verfahren gemäss Anspruch 1, ferner umfassend das Ermöglichen, dass sich die Flüssigkeit innerhalb des ersten fluiden Tröpfchens (31) und die Flüssigkeit innerhalb des zweiten fluiden Tröpfchens (32) innerhalb des vereinten Tröpfchens (38) mischen.

5. Verfahren gemäss Anspruch 1, wobei das erste fluide Tröpfchen (31) und das zweite fluide Tröpfchen (32) jeweils eine andere Zusammensetzung haben und wobei mindestens eines des ersten fluiden Tröpfchens (31) und des zweiten fluiden Tröpfchens (32) wahlweise ein Enzym umfasst oder eines des ersten fluiden Tröpfchens (31) und des zweiten fluiden Tröpfchens (32) wahlweise zwei Mittel umfasst, die in einer chemischen Reaktion miteinander reagieren; und das andere fluide Tröpfchen einen Inhibitor der chemischen Reaktion umfasst.

6. Verfahren gemäss Anspruch 1, wobei das erste fluide Tröpfchen (31) und/oder das zweite fluide Tröpfchen (32) eine Flüssigkeit ist.

7. Verfahren gemäss Anspruch 1, ferner umfassend das Aushärten mindestens eines Teils des vereinten Tröpfchens (38).

8. Verfahren gemäss Anspruch 1, wobei die zweite Geschwindigkeit mindestens ca. 150 %, 200 %, 300 % oder 500 % der ersten Geschwindigkeit beträgt.

**Revendications**

1. Procédé, qui comprend :

la fourniture d'un système microfluidique qui comprend un canal (35) ;
la fourniture d'un premier courant fluidique de gouttelettes (31) à l'intérieur dudit canal (35), les gouttelettes (31) à l'intérieur du premier courant fluidique étant des gouttelettes plus grosses (31) ayant un diamètre moyen inférieur à environ 100 microns et une distribution de diamètres telle que pas plus d'environ 5 % des gouttelettes (31) ont un diamètre supérieur à environ 10 % du diamètre moyen ;
la fourniture d'un second courant fluidique de gouttelettes (32), les gouttelettes (32) à l'intérieur du second courant fluidique étant des gouttelettes plus petites (32) ayant un diamètre moyen inférieur à environ 100 microns et une distribution de diamètres telle que pas plus d'environ 5 % des gouttelettes (32) ont un diamètre supérieur à environ 10 % du diamètre moyen, et les gouttelettes (31) à l'intérieur du premier courant fluidique ayant un diamètre moyen supérieur à environ 125 % du diamètre moyen des gouttelettes (32) à l'intérieur du second courant fluidique ; et
le fait d'entraîner le déplacement des gouttelettes plus grosses (31) du premier courant fluidique à une première vitesse à l'intérieur du canal (35) et le déplacement des gouttelettes plus petites (32) du second courant fluidique à une seconde vitesse sensiblement supérieure à la première vitesse à l'intérieur du canal (35) ;

le fait d'entraîner le contact entre au moins une gouttelette (31) du premier courant fluidique et au moins une gouttelette (32) du second courant fluidique de telle manière que les gouttelettes en contact ne coalescent pas ; et

l'application d'un champ électrique à la ou aux gouttelettes (31) du premier courant fluidique de gouttelettes (31) et à la ou aux gouttelettes (32) du second courant fluidique de gouttelettes (32) en contact, de telle manière que les gouttelettes coalescent en une gouttelette combinée (38).

2. Procédé selon la revendication 1, dans lequel le volume de la première gouttelette fluidique (31) est supérieur au volume de la seconde gouttelette fluidique (32), l'action consistant à appliquer un champ électrique comprend facultativement l'application d'un champ électrique à un canal (35) contenant le premier courant fluidique de gouttelettes (31) et le second courant fluidique de gouttelettes (32) et/ou le canal (35) a une dimension en coupe transversale moyenne inférieure à environ 5 mm.

3. Procédé selon la revendication 1, dans lequel la première gouttelette fluidique (31) a une dimension en coupe transversale inférieure à environ 100, 30, 10 ou 3 microns.

4. Procédé selon la revendication 1, qui comprend en outre le fait de laisser le fluide à l'intérieur de la première gouttelette fluidique (31) et le fluide à l'intérieur de la seconde gouttelette fluidique (32) se mélanger dans la gouttelette combinée (38).

5. Procédé selon la revendication 1, dans lequel la première gouttelette fluidique (31) et la seconde gouttelette fluidique (32) ont chacune une composition différente et dans lequel au moins l'une de la première gouttelette fluidique (31) et de la seconde gouttelette fluidique (32) comprend facultativement une enzyme ou l'une de la première gouttelette fluidique (31) et de la seconde gouttelette fluidique (32) comprend facultativement deux agents interagissant dans une réaction chimique ; et l'autre gouttelette fluidique comprend un inhibiteur de la réaction chimique.

6. Procédé selon la revendication 1, dans lequel la première gouttelette fluidique (31) et/ou la seconde gouttelette fluidique (32) est liquide.

7. Procédé selon la revendication 1, qui comprend en outre le durcissement d'au moins une partie de la gouttelette combinée (38).

8. Procédé selon la revendication 1, dans lequel la seconde vitesse est d'au moins environ 150 %, 200 %, 300 % ou 500 % de la première vitesse.

Fig. 1

EP 2 004 316 B1

Fig. 2

Fig.3A

Fig.3B

Fig. 4A

Fig. 4B

Fig. 5A

Fig. 5B

Fig. 5C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6120666 A
- US 6116516 A
- US 6187214 B
- US 6248378 B
- US O117246 W
- WO 0189788 A
- WO 2005021151 A

### Non-patent literature cited in the description

- **Ganan-Calvo.** Generation of Steady Liquid Microthreads and Micron-Sized Monodisperse Sprays and Gas Streams. *Phys. Rev. Lett.,* 12 January 1998, vol. 80 (2), 285-288
- **Thorsen.** Dynamic Pattern Formation in a Vesicle-Generating Microfluidic Device. *Phys. Rev. Lett.,* 30 April 2001, vol. 86, 18
- **Angell et al.** *Scientific American,* 1983, vol. 248, 44-55
- **Duffy et al.** Rapid Prototyping of Microfluidic Systems and Polydimethylsiloxane. *Analytical Chemistry,* 1998, vol. 70, 474-480